(19) 

Europäisches
Patentamt
European
Patent Office
Office européen
des brevets

(11) **EP 4 273 308 A1**

(12) **EUROPEAN PATENT APPLICATION**
published in accordance with Art. 153(4) EPC

(43) Date of publication:
**08.11.2023 Bulletin 2023/45**

(21) Application number: **21915135.4**

(22) Date of filing: **20.12.2021**

(51) International Patent Classification (IPC):
***D01F 2/02*** *(2006.01)*

(52) Cooperative Patent Classification (CPC):
**D01F 2/02**

(86) International application number:
**PCT/JP2021/047094**

(87) International publication number:
**WO 2022/145275 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.01.2021 JP 2021000043**

(71) Applicant: **Asahi Kasei Kabushiki Kaisha
Tokyo 1000006 (JP)**

(72) Inventors:
• **JONO, Keisuke**
 **Tokyo 100-0006 (JP)**
• **OGAWA, Yuki**
 **Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **CELLULOSE FIBER MANUFACTURING METHOD**

(57) Provided are: a cellulose fiber manufacturing method for suppressing the occurrence of thread breakage in a spinning step and unevenness in the physical properties of obtained fibers, thus enabling stable spinning; and cellulose fibers that are highly strengthened, in which fibrillation is suppressed, and that have a pleasant texture. The present invention provides a cellulose fiber manufacturing method including the following steps: a solution preparation step for dissolving cellulose in a mixed solvent of an aprotic polar solvent and a quaternary onium salt; a discharge step for discharging the obtained solution in a fibrous form through a spinneret, the moisture content of the solution at the time of discharging falling within the range from 0.05 mass% to 8 mass%; and a solidification step for solidifying the discharged fibers in a water-based solidification bath containing water and the mixed solvent.

**EP 4 273 308 A1**

**Description**

FIELD

The present invention relates to a method for producing cellulose fiber.

BACKGROUND

With increasing emphasis on protection of the environment in recent years, it has been a goal to develop methods that allow production of fibers composed of plant-derived cellulose, as a renewable source, with reduced environmental load. Lyocell fibers using N-methylmorpholine oxide (NMMO) as the solvent are an example of cellulose fibers produced with low environmental load, but such fibers have been associated with problems such as hardness and fibrillation, and therefore a substitute solvent has been desired.

PTL 1 describes a solvent to be used for polysaccharide dissolution, the solvent comprising tetraalkylammonium acetate and an aprotic polar solvent, wherein the content ratio of the aprotic polar solvent is 35 wt% or greater.

PTL 2 describes a method for producing a stretched cellulose film which comprises a solvent preparing step in which a mixed solvent is obtained by mixing tetrabutylammonium acetate and dimethyl sulfoxide in a weight mixing ratio of 5:95 to 50:50, a dissolving step in which cellulose starting material is added to the mixed solvent and the cellulose starting material is dissolved at a dissolution temperature of 20 to 50°C to obtain a cellulose solution, a stretching and solidifying step in which the cellulose solution is extruded into the coagulating bath as a film to form a semi-coagulated film, and the semi-coagulated film is passed between multiple drawing rollers while stretching in the direction of film formation to form a coagulated film in the coagulating bath, a washing step in which the coagulated film is washed, and a drying step in which the film is dried after the washing step.

[CITATION LIST]

[PATENT LITERATURE]

[PTL 1] Japanese Patent Publication No. 5820688
[PTL 2] Japanese Unexamined Patent Publication No. 2015-93876

SUMMARY

[TECHNICAL PROBLEM]

By dissolving cellulose in a solvent, casting the resulting solution into a desired shape and contacting it with a non-solvent, it is possible to mold it into molded articles of various shapes. For production of fibers, however, the non-homogeneous state of the solution tends to easily create yarn breakage or irregularities, making it difficult to achieve stable spinning.

The technologies of PTLs 1 and 2 can be useful for molding films from a solution of cellulose dissolved by a simple procedure in a mixed solvent of tetraalkylammonium acetate and an aprotic polar solvent, but they do not allow continuous and stable spinning for fiber production, nor do they reduce variation in the thicknesses and physical properties of the resulting fiber.

In light of these problems of the prior art, the problem to be solved by the invention is to provide a novel method for production of cellulose fiber that reduces yarn breakage in the spinning step and variation in physical properties of the obtained fiber, while also allowing stable spinning to be carried out.

[SOLUTION TO PROBLEM]

As a result of diligent experimentation with the aim of solving this problem, the present inventors have found, unexpectedly, that the problem can be solved by the following construction, and the invention has been completed upon this finding.

Specifically, the present invention provides the following.

[1] A method for producing cellulose fibers comprising the following steps:

a solution preparation step in which cellulose is dissolved in a mixed solvent of an aprotic polar solvent and a quaternary onium salt;

an extrusion step in which the obtained solution is extruded from a spinneret into a filamentous form, where the moisture content of the solution during extrusion is 0.05 mass% to 8 mass%; and

a coagulation step in which the extruded filament is coagulated in an aqueous coagulating bath containing water and the mixed solvent.

[2] The method according to [1] above, wherein the temperature of the solution in the extrusion step is 40°C to 90°C.

[3] The method according to [1] or [2] above, wherein the weight ratio of the aprotic polar solvent and the quaternary onium salt in the mixed solvent is 50:50 to 95:5.

[4] The method according to any one of [1] to [3] above, wherein the aprotic polar solvent is dimethyl sulfoxide.

[5] The method according to any one of [1] to [4] above, wherein the quaternary onium salt is a quaternary ammonium salt or quaternary phosphonium salt.

[6] The method according to any one of [1] to [5] above, wherein an air-gap of 1 mm to 75 mm is provided in the extrusion step.

[7] The method according to [6] above, wherein spinning is carried out in an atmosphere with a relative humidity of 90% or lower in the air-gap during the extrusion step.

[8] Cellulose fibers having a tensile strength of 1.3 cN/dtex or greater and a fibrillation degree of 170% or lower.

[9] The cellulose fibers according to [8] above, wherein the cellulose fibers are filament yarns.

[ADVANTAGEOUS EFFECTS OF INVENTION]

By using the method for producing cellulose fibers of the invention it is possible to carry out stable spinning and to reduce yarn breakage in the spinning step and reduce variation in the thickness or physical properties of the obtained fibers, while also yielding fibers with high strength, inhibited fibrillation and an excellent feel on the skin.

DESCRIPTION OF EMBODIMENTS

Embodiments of the invention will now be explained in detail with the understanding that the invention is not limited to the embodiments.

<Method for producing cellulose fibers>

One embodiment of the invention provides a method for producing cellulose fibers comprising the following steps:

a solution preparation step in which cellulose is dissolved in a mixed solvent of an aprotic polar solvent and a quaternary onium salt;

an extrusion step in which the obtained solution is extruded from a spinneret into a filamentous form, where the moisture content of the solution during extrusion is 0.05 mass% to 8 mass%; and

a coagulation step in which the extruded filament is coagulated in an aqueous coagulating bath containing water and the mixed solvent.

The method for producing cellulose fibers may be a method of producing multifilaments or monofilaments, or it may be a method of producing filament yarns or staple fibers. According to one aspect, the method for producing cellulose fibers is a method for producing multifilament yarns.

The "filament yarns" for this embodiment are fibers with lengths of 3 mm or greater, the fiber lengths preferably being 5 mm or greater and more preferably 10 mm or greater, with continuous long fibers being even more preferred. Filament yarns are prone to problems such as tearing during the process of weaving or knitting as a result of fluff generation, and uneven dyeing due to irregular sizes of the fibers in the lengthwise direction. In order to avoid these problems there is a need for higher quality of filament yarns compared to the staple fibers obtained by cutting after spinning. It is therefore necessary to develop a stable spinning technique that reduces generation of fluff and irregularities.

The constituent elements of the method for producing cellulose fibers will now be explained using concrete examples.

<Solution preparation step>

The method for producing cellulose fibers of the embodiment includes a solution preparation step. In the solution preparation step, cellulose is dissolved in a mixed solvent of an aprotic polar solvent and a quaternary onium salt to prepare a solution. From the viewpoint of satisfactorily dissolving the cellulose, the quaternary onium salt content of the mixed solvent of the aprotic polar solvent and quaternary onium salt is preferably 5 mass% or greater, more preferably 10 mass% or greater and even more preferably 15 mass% or greater, and from the viewpoint of avoiding excessively high viscosity of the mixed solvent, it is preferably 50 mass% or lower, more preferably 40 mass% or lower and even more preferably 30 mass% or lower. Most quaternary onium salts are solid at ordinary temperature, and since the mixed solvent is in a liquid state it must be mixed with a liquid aprotic polar solvent. A quaternary onium salt content of 50 mass% or lower in the mixed solvent will tend to allow the mixed solvent to impregnate the cellulose starting material without an excessively low volume of the mixed solvent obtained as a liquid, or excessively high viscosity of the mixed solvent.

<Mixed solvent>

The mixed solvent to be used in the solution preparation step includes an aprotic polar solvent and a quaternary onium salt. The aprotic polar solvent is preferably one that does not interfere with interaction between the quaternary onium salt and cellulose, and that does not impair the solubility. The aprotic polar solvent may be a sulfoxide-based solvent, amide-based solvent or pyridine-based solvent. Specific examples include dimethyl sulfoxide (DMSO), N,N-dimethylformamide, N,N-dimethyl acetamide, N-methyl-2-pyrrolidone, N,N'-dimethylpropyleneurea, 1,3-dimethyl-2-imidazolidinone, tetramethylurea and pyridine, as well as their derivatives. Dimethyl sulfoxide is especially preferred from the viewpoint of cellulose solubility.

The carbon numbers of the four alkyl groups of the constituent quaternary onium cation in the quaternary onium salt are preferably each independently 3 to 6. The carbon numbers of the alkyl group may be the same or different. They may have a straight-chain structure, a branched structure, or a cyclic structure. The alkyl chains may also have functional groups such as ether bonds, thioether bonds, hydroxyl groups, mercapto groups or amino groups. If the carbon numbers of the alkyl group are 2 or less, the salt will have a stronger ionic property, lowering solubility in the aprotic polar solvent. This can also lower cellulose solubility, or prevent dissolution, using the prepared mixed solvent. If the alkyl groups have carbon numbers of 7 or greater, then the molecular weight of the cationic portion will be higher, lowering the substance ratio of the anionic portion that interacts with the cellulose in the resulting salt, and consequently the cellulose may potentially have lower solubility, or be insoluble, in the prepared mixed solvent. From the viewpoint of solubility and availability, the carbon number of the alkyl groups is most preferably 4. The anionic portion of the quaternary onium salt may be a carboxylate anion, amino acid anion, sulfate anion, sulfite anion, phosphate anion or phosphite anion, or a derivative thereof. A carboxylate anion is preferred from the viewpoint of cellulose solubility, with formate anion, acetate anion, propionate anion or butyrate anion being more preferred, and acetate anion being especially preferred.

The quaternary onium salt is preferably a quaternary ammonium salt or quaternary phosphonium salt from the viewpoint of cellulose dissolution. The references to "quaternary onium salt" herein also apply to quaternary ammonium salts and quaternary phosphonium salts. Preferred quaternary ammonium salts are tetraethylammonium acetate (TEAA), tetrabutylammonium acetate (TBAA) and tetraoctylammonium acetate (TOAA). Preferred quaternary phosphonium salts are tetraethylphosphonium acetate (TEPA), tetrabutylphosphonium acetate (TBPA) and tetraoctylphosphonium acetate (TOPA).

The cellulose starting material may be wood pulp such as conifer pulp or broadleaf tree pulp, or nonwood pulp. Nonwood pulp may be cotton pulp such as cotton linter pulp, or hemp pulp, bagasse pulp, kenaf pulp, bamboo pulp or straw pulp. Cotton pulp, hemp pulp, bagasse pulp, kenaf pulp, bamboo pulp and straw pulp are the refined pulp obtained from the respective starting materials of cotton lint, cotton linter, hemp abaca (usually from Ecuador or the Philippines), sisal, bagasse, kenaf, bamboo and straw, by refining steps such as delignification by digestion treatment and hemicellulose removal, and bleaching steps. Purified products of sea weed cellulose or sea squirt cellulose may also be used as cellulose starting materials. Refined pulp from cotton linter is especially preferred as it allows starting materials obtained from scrap wood to be effectively utilized.

The concentration of the cellulose starting material is preferably 20 mass% or lower and more preferably 15 mass% or lower from the viewpoint of ensuring a homogeneous dissolved state, and preferably 3 mass% or greater and more preferably 4.5 mass% or greater from the viewpoint of lowering the amount of solvent usage.

Polysaccharides other than cellulose may also be added to the cellulose starting material to modify the fiber properties. Polysaccharides other than cellulose include xylan, glucomannan, $\alpha$-1,4-glucan, $\alpha$-1,3-glucan, $\beta$-1,3-glucan (curdlan and paramylon), pullulan, chitin and chitosan.

The procedure for loading the starting material in the solution preparation step may be either of the following (1) or (2):

  (1) preparing a mixed solvent of an aprotic polar solvent and a quaternary onium salt and loading in the cellulose, or
  (2) loading the cellulose into an aprotic polar solvent to swell the cellulose starting material, and then adding a quaternary onium salt. In practice it is preferred to use method (1), since the solvent recovery step described below will allow recovery as the mixed solvent.

The temperature of the solution in the solution preparation step may be 20°C or higher, and it is most preferably 50°C or higher from the viewpoint of uniformly dissolving the cellulose in a short period of time. From the viewpoint of lowering energy cost for solution preparation, the temperature is preferably 90°C or lower and more preferably 85°C or lower.

There are no particular restrictions on the apparatus used in the solution preparation step. For example, a magnetic stirrer, microwave apparatus, uniaxial mechanical stirrer or biaxial planetary mixer, kneader or twin-screw extruder may be used. Since a high concentration of cellulose in the solution increases the solution viscosity, it is most preferred to use an apparatus having a twin-screw mechanism such as a planetary mixer or kneader, from the viewpoint of uniform stirring of the high-viscosity solution.

The moisture content of the mixed solvent in the solution preparation step is 8 mass% or lower, preferably 6.5 mass% or lower and more preferably 5 mass% or lower. If the moisture content of the mixed solvent is 8 mass% or greater, the water molecules will inhibit interaction between the quaternary onium salt and cellulose, potentially impairing the solubility.

The moisture content in the solution prepared in the solution preparation step must be 8 mass% or lower, and is preferably 5 mass% or lower, more preferably 4 mass% or lower and even more preferably 3 mass% or lower. Limiting the moisture content in the solution to 8 mass% or lower will ensure a solution viscoelasticity and spinnability that are suitable for spinning, and will allow stable extrusion. A moisture content of 4 mass% or lower in the solution will allow an air-gap to be provided between the spinneret surface and coagulating solution surface for stretching of the filament. From the viewpoint of energy load during drying of the solvent and starting materials before preparing the solution, the moisture content is preferably 0.05 mass% or greater and more preferably 0.1 mass% or greater.

If the solution prepared in the solution preparation step is directly used for the subsequent extrusion step, then the moisture content in the solution prepared in the solution preparation step may be used as the moisture content of the solution during extrusion in the extrusion step.

The moisture content of the solvent during extrusion may be adjusted by humidification of the starting material used in the solution preparation step.

<Extrusion step>

The method for producing cellulose fibers of the embodiment includes an extrusion step in which the solution prepared in the solution preparation step is extruded from a spinneret into a filamentous form. In the extrusion step, the solution previously obtained in the solution preparation step is extruded into a filamentous form through a spinneret. The spinneret may be either a multifilament or monofilament spinneret, selected as appropriate. For multifilaments, the number of holes is not particularly restricted and may be selected as appropriate for the purpose. The temperature for extrusion of the extrude solution may be selected in consideration of balance between spinnability and viscoelasticity, but it is preferably 40°C or higher or more preferably 50°C or higher from the viewpoint of ensuring spinnability of the extruded solution.

In the method for producing cellulose fibers of the embodiment, it is possible to provide an air-gap between the spinneret surface and the coagulating solution by adjusting the moisture content of the solution during extrusion. From the viewpoint of ensuring self-support of the extruded solution between the air-gap, the temperature of the extruded solution during extrusion is preferably 90°C or lower and more preferably 85°C or lower. The extrusion speed may be appropriately selected in consideration of the desired wind-up speed and filament properties.

In the method for producing cellulose fibers of the embodiment, it is possible to provide an air-gap between the spinneret surface and the coagulating solution by adjusting the moisture content of the solution during extrusion. The solution prepared in the solution preparation step undergoes rapid coagulation upon contact with the coagulating solution, and therefore stretching of the filament is preferably carried out between the air-gap before coagulation. If stretching is carried out between the air-gap then defects in the fiber structure can be reduced more greatly than by stretching the fibers after coagulation, allowing a filament with excellent strength and ductility to be obtained.

From the viewpoint of carrying out sufficient stretching between the air-gap, the air-gap length is preferably 1 mm or greater and more preferably 2.5 mm or greater. From the viewpoint of inhibiting adhesion between filaments in the air-gap, the air-gap length is preferably 75 mm or smaller and more preferably 50 mm or smaller.

<Relative humidity in air-gap>

The method for producing cellulose fibers of the embodiment can further inhibit extrusion defects such as monofilament breakage and yarn bending by controlling the humidity in the air-gap. However, a high-humidity environment tends to cause problems, including accelerated partial coagulation of the extruded yarn, clogging of the nozzle due to condensation on the spinneret surface, gel generation, monofilament breakage, and inability to achieve sufficient stretching.

From the viewpoint of adequately inhibiting such problems during extrusion, the relative humidity in the air-gap is preferably 90% or lower, more preferably 85% or lower and even more preferably 80% or lower. From this viewpoint there is no need to set the lower limit, but from a practical standpoint the lower limit is preferably 10% or greater.

The method of controlling the humidity in the air-gap may be controlling the atmosphere in the surrounding environment using a humidity control booth around the air-gap, or blasting dry air into the air-gap, but there are no particular restrictions on the method of control.

The relative humidity can be measured by the following method.

The temperature and humidity of the laboratory environment were measured in the Examples described below using the digital thermometer/hygrometer (EX-502) of an Empex Instruments, Inc.. The probe was brought close to the air-gap, and the temperature and humidity in the air-gap were measured at a height of 5 mm from the coagulating solution surface and at a position 2 mm from the spinneret holder in the horizontal direction.

<Coagulation step>

The method for producing cellulose fibers of the embodiment includes a coagulation step in which the fibers extruded in the extrusion step are coagulated in an aqueous coagulating bath containing water and the mixed solvent. Since the quaternary onium salt is highly soluble in water, desolvation proceeds efficiently using the aqueous coagulating solution, resulting in coagulation. The temperature of the coagulating solution in the coagulation step is preferably 15°C or higher and more preferably 18°C or higher from the viewpoint of efficient desolvation from the solution. From the viewpoint of reducing the energy load, it is preferably 60°C or lower and more preferably 50°C or lower. The coagulating bath type may be a stationary bath or a fluidized bath. When an air-gap is provided during the extrusion step, it is preferred to use a fluidized bath to lower resistance as the filament enters into the coagulating solution through the air-gap. From the viewpoint of inhibiting rapid coagulation, the coagulating solution component preferably constitutes 1.5 mass% or more and most preferably 3 mass% or more of the mixed solvent. From the viewpoint of adequately coagulating the fibers in the coagulation step, the mixed solvent is added at preferably 50 mass% or lower, more preferably 45 mass% or lower and most preferably 40 mass% or lower.

<Washing step>

The method for producing cellulose fibers of the embodiment may include a washing step in which the mixed solvent is removed from the coagulated fibers by water washing. In this step, the mixed solvent remaining on the fibers that were coagulated in the coagulation step are removed by water washing. The washing system is not particularly restricted, and may be a washing bath and washing roll, for example. The temperature of the water used for washing is preferably 15°C or higher and more preferably 18°C or higher, from the viewpoint of washing efficiency. From the viewpoint of reducing the energy load, it is preferably 60°C or lower and more preferably 50°C or lower.

<Drying step>

The method for producing cellulose fibers of the embodiment may include a drying step in which the washed fibers are dried. In the drying step, the fibers with the mixed solvent removed in the washing step are dried. The drying system is not particularly restricted and may be a hot air drier, contact dryer or radiation dryer, for example. The drying temperature is preferably 60°C or higher and more preferably 70°C or higher, from the viewpoint of drying efficiency. The drying temperature is preferably 200°C or lower, more preferably 180°C or lower and even more preferably 170°C or lower, from the viewpoint of reducing energy load and preventing degradation of the cellulose fibers. Drying may be carried out continuously on the fibers passing through the washing step, or it may be carried out on the fibers that have been reeled out as undried yarn after washing.

<Solvent recovery step>

The method for producing cellulose fibers of the embodiment preferably includes a solvent recovery step in which the solvent mixed with the coagulating solution and washing fluid is recovered. In the solvent recovery step, the solvent mixed with the coagulating solution and washing fluid is recovered by a method such as distillation, membrane separation or atomized separation. If the solvent is recovered at high efficiency it is possible to inhibit discharge of the solvent component into the environment and to greatly minimize environmental load.

<Filament yarn (staple fiber) properties>

<Strength and ductility>

Another embodiment of the invention provides cellulose fibers having a tensile strength of 1.3 cN/dtex or greater and a fibrillation degree of 170% or lower. Filament yarns are preferred since they can be used without passing through a spinning step, thus making it possible to take advantage of the shapes of the fibers themselves, and allowing fibers with smooth, glossy surfaces to be obtained.

The tensile strength of the cellulose filament yarns of the embodiment is 1.3 cN/dtex or greater. A higher tensile strength results in stronger threads and resistance to yarn breakage during steps such as dyeing and weaving, and is therefore preferred for increased yield. One specific effect in post-treatment steps is providing physical properties such as yarn tension resistance, when a fine structured woven fabric is produced in the weaving step. The tensile strength referred to here can be measured by the following method.

The tensile strength of the cellulose filament yarns of the embodiment is preferably 1.8 cN/dtex or greater, more preferably 2.0 cN/dtex or greater, even more preferably 2.2 cN/dtex or greater and most preferably 2.5 cN/dtex or greater. Since a higher value is preferred there is no need to set an upper limit, but a preferred realistic upper limit is 5 cN/dtex or lower.

The elongation of the cellulose filament yarns of the embodiment is preferably 7% or greater. Greater elongation can prevent yarn breakage when tension is applied to the yarn in the weaving step, allowing micromachining. This is also preferred as it will increase wearing comfort when the woven fabric is used for clothing. The elongation of the filament yarns of the embodiment is preferably 8% or higher, more preferably 10% or higher and even more preferably 15% or higher. Since a higher value is preferred, there is no need to set an upper limit, but a preferred realistic upper limit is 30% or lower.

The tensile strength and elongation referred to here can be measured by the following method using a TENSILON universal testing machine (RTG-1250) by A&D Co., Ltd. and a 50 N load cell, according to JIS L 1013:2010, 8.5.1 (standard test). A cellulose fiber was attached to the grip section of the tester while in a loosely stretched state and subjected to a tensile test with a grip spacing of 30 cm and a pull rate of 30 cm/min, and the load and elongation at the point of sample breakage were measured at 10 points, calculating the strength and elongation at each point by the following formula, with the number-average value being recorded as the strength (average strength) and elongation for the sample. When the breaking strength is smaller than the strength at maximum load, the strength at maximum load and the elongation at that moment are measured.

$$\text{Strength (cN/dtex)} = \text{Strength at breakage or strength at maximum load (cN)/sample size (dtex)}$$

$$\text{Elongation (\%)} = \{\text{Elongation at breakage or elongation at maximum load (mm)/grip spacing (mm)}\} \times 100$$

<Yarn variation>

The yarn variation of the cellulose filament yarns of the embodiment is preferably 12% or lower, more preferably 10.5% or lower and even more preferably 9% or lower. A smaller yarn variation will produce smooth fibers with more excellent feel on the skin, and with the ability to be dyed more evenly. Since a lower value is preferred, there is no need to set a lower limit, but a preferred realistic lower limit is 0.1% or higher.

The yarn variation referred to here is the yarn variation (coefficient of variation of strength) calculated by dividing the standard deviation for the strength by the average strength.

<Fibrillation degree>

The fibrillation degree of the cellulose filament yarns of the embodiment is preferably 170% or lower, more preferably 150% or lower, even more preferably 120% or lower and most preferably 100% or lower. A lower fibrillation degree will help inhibit whitening when the fibers are formed into a fabric. Fluffing can also be inhibited, allowing the processability to be improved during weaving and knitting. Since a lower value is preferred, there is no need to set an lower limit, but a preferred realistic lower limit is 1% or higher.

The fibrillation degree referred to here can be measured by the following method. A filament yarn sample of the obtained cellulose fiber was cut out to 3 mm fiber lengths to prepare a staple fiber sample. The sample obtained as staple fibers after the spinning step was directly provided for testing. A 0.2 g portion of the staple fiber sample was dispersed in a 3 mass% aqueous sulfuric acid solution (51 g) and immersed for 30 minutes at 70°C, after which it was washed with 600 mL of water. The acid-treated staple fiber sample was dispersed in 300 g of water and stirred for 30 minutes with a household mixer for fibrillation treatment.

The fibrillated aqueous dispersion of the staple fiber sample was cast onto a silicon board and covered with cover glass, and a digital microscope (Lasertec Corp.) was used for 5-field observation at 185x magnification.

The obtained image was converted to grayscale using the Python program CV2, and then binarized by Otsu's method. Assigning black to the sections corresponding to the fibers (including fibril portions), the area was calculated and the total area (A1) of the fibers before fibrillation and the total area (A2) of the fibers after fibrillation in each image were used to calculate the fibrillation degree by the following formula.

$$\text{Fibrillation degree (\%)} = \{(A2 - A1)/A1\} \times 100$$

<Degree of crystallinity>

The degree of crystallinity of the cellulose filament yarns of the embodiment is preferably 50% or lower from the viewpoint of moisture absorption and skin feel of the fibers. The degree of crystallinity is more preferably 49% or lower and even more preferably 48% or lower. From the viewpoint of exhibiting satisfactory mechanical properties, the degree of crystallinity is preferably 35% or greater, more preferably 37% or greater and even more preferably 39% or greater.

The degree of crystallinity of the filament yarns was determined using a NANOPIX nanoscale X-ray structure evaluator by Rigaku Corp. Measurement was performed with the environment surrounding the sample cell in a vacuum state, and irradiating X-rays onto the fiber sample with 0.154 nm X-wavelength, a camera length of 86 mm and an exposure time of 9 h/1 sample. The degree of crystallinity and crystallite size information were obtained by WAXS profile analysis, taking the circular average of the measured two-dimensional WAXS pattern. The area ratio of the crystal-derived diffraction peak with respect to the WAXS profile was recorded as the degree of crystallinity (%).

<Degree of orientation>

The degree of orientation of the cellulose filament yarns of the embodiment is preferably 90% or lower, more preferably 88% or lower and even more preferably 87% or lower, from the viewpoint of inhibiting fibrillation and from the viewpoint of moisture absorption and skin feel. From the viewpoint of exhibiting satisfactory mechanical properties, the degree of orientation is preferably 75% or greater, more preferably 78% or greater and even more preferably 80% or greater.

The degree of orientation of the cellulose filament yarns was calculated by the following formula, using the full width at half maximum (FWHM) of the diffraction peak intensity from the faces of cellulose crystals obtained during measurement of the crystallinity. The full width at half maximum (FWHM) was determined by extending the baseline at the skirt of the peak in the direction of distribution of the scattering intensity, and fitting with a Gaussian function.

$$\text{Degree of orientation:} = 1 - \text{FWHM}/180$$

<Secondary swelling degree>

The secondary swelling of the cellulose filament yarns of the embodiment is preferably 140 mass% or lower, more preferably 130 mass% or lower and even more preferably 120 mass% or lower, from the viewpoint of avoiding excess moisture absorption and water absorption by the fibers. From the viewpoint of imparting suitable moisture absorption and water absorption capacity, it is preferably 80 mass% or greater, more preferably 85 mass% or greater and even more preferably 90 mass% or greater.

The secondary swelling was calculated by the following method. After immersing the fiber sample in purified water for 10 minutes, glass beads were placed on the bottom, and a centrifuge tube with a metal mesh was placed over the beads, prior to centrifugal separation at 2,000 rpm for 10 minutes. The fiber sample after removal of the fiber surface moisture by centrifugal separation was dried at 105°C for 1 hour, and the secondary swelling was calculated by the following formula.

$$[\{(\text{Weight before drying}) - (\text{weight after drying})\}/(\text{weight after drying})] \times 100$$

<Usage of fibers>

Since the cellulose filament yarns of the embodiment have reduced fibrillation and excellent feel on the skin, they can be suitably used in clothing or lining, for apparel such as functional inner items or traditional dresses, for home textiles such as beddings or towels, and for small clothing items such as neckties or scarfs.

EXAMPLES

The present invention will now be explained in greater detail using Examples and Comparative Examples. The physical properties were measured by the following methods.

<Temperature and humidity>

The temperature and humidity of the laboratory environment were measured using the digital thermometer/hygrometer (EX-502) of an Empex Instruments,Inc.. The probe was brought close to the air-gap, and the temperature and humidity in the air-gap was measured at a height of 5 mm from the coagulating solution surface, and at a position 2 mm from the spinneret holder in the horizontal direction.

<Evaluation of physical properties>

<Cellulose fibers>

[Size]

The obtained cellulose fibers were humidified overnight in a loosely stretched state in an environment at room temperature (23°C) and 50% RH. A 1 m portion was cut from the humidified sample and the weight measured at 10 points, after which the number-average value was multiplied by 10,000 to obtain the size (dtex) of the sample.

[Strength and elongation]

These properties can be measured by the following method using a TENSILON universal testing machine (RTG-1250) by A&D Co., Ltd. and a 50 N load cell, according to JIS L 1013:2010, 8.5.1 (standard test). A cellulose fiber was attached to the grip section of the tester while in a loosely stretched state and subjected to a tensile test with a grip spacing of 30 cm and a pull rate of 30 cm/min, and the load and elongation at the point of sample breakage were measured at 10 points, calculating the strength and elongation at each point by the following formula, with the number-average value being recorded as the strength (average strength) and ductility for the sample. When the breaking strength is smaller than the strength at maximum load, the strength at maximum load and the elongation at that moment are measured.

$$\text{Strength (cN/dtex)} = \text{Strength at breakage or strength at maximum load (cN)/size of sample (dtex)}$$

$$\text{Elongation (\%)} = \text{Elongation at breakage or elongation at maximum load (mm)/grip spacing (mm)}$$

[Yarn variation]

The yarn variation (coefficient of variation of strength) was calculated by dividing the standard deviation for the strength by the average strength.

[Moisture content]

The moisture content of the solution was determined by measuring the moisture content twice by current titration using an MKC-520 Karl Fischer moisture meter by Kyoto Electronics Co., Ltd., and calculating the average value.

[Stable running time]

Time was measured after beginning take-up of the filament at the respective take-up speeds listed in Table 1 until the all of the filaments could no longer be taken up due to filament breakage or poor extrusion of the spinning stock solution, and the measured time was recorded as the stable running time (min).

[Degree of crystallinity]

The degree of crystallinity of the fibers was determined using a NANOPIX nanoscale X-ray structure evaluator by Rigaku Corp. Measurement was performed with the environment surrounding the sample cell in a vacuum state, and irradiating X-rays onto the fiber sample with 0.154 nm X-wavelength, a camera length of 86 mm and an exposure time of 9 h/1 sample. The degree of crystallinity and crystallite size information were obtained by WAXS profile analysis, taking the circular average of the measured two-dimensional WAXS pattern. The area ratio of the crystal-derived diffraction peak with respect to the WAXS profile was recorded as the degree of crystallinity (%).

[Degree of orientation]

The degree of orientation of the fibers was calculated by the following formula, using the full width at half maximum (FWHM) of the diffraction peak intensity from the faces of cellulose crystals obtained during measurement of the crystallinity. The full width at half maximum (FWHM) was determined by extending the baseline at the skirt of the peak in the direction of distribution of the scattering intensity, and fitting with a Gaussian function.

$$\text{Degree of orientation: } = 1 - \text{FWHM}/180$$

[Secondary swelling]

The secondary swelling was calculated by the following method. After immersing the fiber sample in purified water for 10 minutes, glass beads were placed on the bottom, and a centrifuge tube with a metal mesh was placed over the beads, prior to centrifugal separation at 2,000 rpm for 10 minutes. The fiber sample after removal of the fiber surface moisture by centrifugal separation was dried at 105°C for 1 hour, and the secondary swelling was calculated by the following formula.

$$[\{(\text{Weight before drying}) - (\text{weight after drying})\}/(\text{weight after drying})] \times 100$$

[Fibrillation degree]

The cellulose fiber was cut out to a 3 mm fiber length to prepare a staple fiber sample. A 0.2 g portion of the staple fiber sample was dispersed in a 3 mass% aqueous sulfuric acid solution (51 g) and immersed for 30 minutes at 70°C, after which it was washed with 600 mL of water. The acid-treated staple fiber sample was dispersed in 300 g of water and stirred for 30 minutes with a household mixer for fibrillation treatment.
The fibrillated aqueous dispersion of the staple fiber sample was cast onto a silicon board and covered with cover glass, and a digital microscope (Lasertec Corp.) was used for 5-field observation at 185x magnification.
The obtained image was converted to grayscale using the Python program CV2, and then binarized by Otsu's method. Assigning black to the sections corresponding to the fibers (including fibril portions), the area was calculated and the total area (A1) of the fibers before fibrillation and the total area (A2) of the fibers after fibrillation in each image were used to calculate the fibrillation degree by the following formula.

$$\text{Fibrillation degree (\%)} = \{(A2 - A1)/A1\} \times 100$$

[Organoleptic test for skin feel]

The obtained cellulose fiber was cut to lengths of 100 cm, and a bundle of 10 filaments was formed. One end of the bundle was closed with Cellophane ™ tape and held with the right hand. The closed end (the edge of the Cellophane ™ tape) was lightly gripped with the index finger and thumb of the left hand, and the left hand was anchored while pulling the strand with the right hand at a speed of 1 m/min, making assessment of the quality of feel by the left hand on the following scale. Bemberg fiber was used as the negative control. 5: Extremely smooth control, 3: Very smooth control, 1: Smooth control. Measurement was carried out repeatedly 3 times by 3 males and 7 females aged 25 to 60, and based on the average value of the scores by each participant, the values for the scores by all of the participants were averaged and recorded as the skin feel.

[Organoleptic test for elastic feel of fibers]

The obtained cellulose fiber was cut to lengths of 100 cm, and a bundle of 10 filaments was formed. Both ends were held with the index finger and thumb of the right hand while the center section of the arc was gripped with the index finger and thumb of the left hand, and while rubbing, the feel was assessed on the following scale. Bemberg fiber was used as the negative control. 5: Extremely elastic compared to control, 3: very elastic compared to control, 1: elastic compared to control. Measurement was carried out repeatedly 3 times by 3 males and 7 females aged 25 to 60, and based on the average value of the scores by each participant, the values for the scores by all of the participants were averaged and recorded as the elastic feel of the fibers.

The elastic feel referred to here means high elasticity with a firm feel.

[Example 1]

Dimethyl sulfoxide (DMSO) (Kanto Kagaku Co., Ltd.) and tetrabutylammonium acetate (TBAA) (Tokyo Kasei Kogyo Co., Ltd.) were mixed to a mass ratio of 75:25, and linter pulp was used as natural cellulose and immersed in the aforementioned mixed solvent to a linter pulp content of 9 mass% to obtain a mixture. A planetary mixer (Primix Corp.) was used for stirring of the mixture for 8 hours at a 50 rpm, 80°C, to obtain a solution of the cellulose uniformly dissolved in the mixed solvent (total: 500 g). The moisture content of the obtained solution was 2 mass%, and the value was recorded as the moisture content of the solution during extrusion.

The obtained solution was degassed by centrifugal separation and transferred to a plunger which had been previously been temperature-controlled to 50°C. A spinneret (0.1 mm diameter, 16 holes) was fitted onto the plunger and a micro feeder was used for extrusion of the solution from a plunger pump at an extrusion temperature of 70°C and an extrusion rate of 6.3 m/min. An air-gap of 10 mm was provided from the spinneret surface to the liquid surface of the coagulating bath. The temperature in the air-gap was 22°C and the humidity was 31% RH.

The extruded filament was coagulated in a coagulating bath (purified water:mixed solvent = 90:10, 25°C), and then washed with a washing bath (purified water, 25°C) and subsequently taken up at a take-up speed of 15 m/min (draft ratio: 2.4).

The wound undried fiber was dried at 110°C and then again taken up to obtain fiber S1 for Example 1.

[Example 2]

A solution was obtained in the same manner as Example 1, except that tetrabutylphosphonium acetate (TBPA) was used as the quaternary onium salt, and the linter pulp was mixed to 5 mass%. Fiber S2 was obtained for Example 2 in the same manner as Example 1, except that the extrusion temperature was 50°C and take-up was at a take-up speed of 10 m/min (draft ratio: 1.6).

[Example 3]

Fiber S3 was obtained for Example 3 in the same manner as Example 2, except that tetraoctylammonium acetate (TOAA) was used as the quaternary onium salt.

[Example 4]

Fiber S4 was obtained for Example 4 in the same manner as Example 1, except that the extrusion temperature was 80°C, an air-gap of 30 mm was provided between the spinneret surface and the liquid surface of the coagulating bath, and take-up was at a take-up speed of 22 m/min (draft ratio: 3.5).

[Example 5]

Fiber S5 was obtained for Example 5 in the same manner as Example 1, except that the number of holes of the spinneret was 50 and the extrusion temperature was 50°C.

[Example 6]

Fiber S6 was obtained for Example 6 in the same manner as Example 5, except that the spinneret surface was immersed in the coagulating solution without providing an air-gap, and take-up was at a speed of 10 m/min (draft ratio: 1.6).

[Example 7]

Fiber S7 was obtained for Example 7 in the same manner as Example 4, except that the extrusion temperature was 42°C and take-up was at a speed of 7.6 m/min (draft ratio: 1.2).

[Example 8]

Fiber S8 was obtained for Example 8 in the same manner as Example 6, except that the moisture content of the solution obtained in the solution preparation step was 5 mass% and take-up was at a rate of 7.6 m/min (draft ratio: 1.2).

[Example 9]

Fiber S9 was obtained for Example 9 in the same manner as Example 4, except that take-up was at a speed of 10 m/min (draft ratio: 1.6). The temperature in the air-gap was 27°C and the humidity was 90% RH.

[Example 10]

Fiber S10 was obtained for Example 10 in the same manner as Example 1, except that a spinneret with a 0.2 mm diameter and 26 holes was used, the extrusion temperature was 50°C, the extrusion rate was 0.5 m/min and take-up was at a take-up speed of 4 m/min (draft ratio: 8).

[Example 11]

Fiber S11 was obtained for Example 11 in the same manner as Example 10, except that the take-up speed was 8 m/min (draft ratio: 16).

[Example 12]

Fiber S12 was obtained for Example 12 in the same manner as Example 10, except that the take-up speed was 15 m/min (draft ratio: 30).

[Example 13]

Fiber S13 was obtained for Example 13 in the same manner as Example 5, except that the extrusion temperature was 70°C and take-up was at a speed of 6.3 m/min (draft ratio: 1.0).

[Comparative Example 1]

Fiber RS1 was obtained for Comparative Example 1 in the same manner as Example 6, except that the moisture content of the solution obtained in the solution preparation step was 9 mass%, the extrusion temperature was 80°C, and take-up was a rate of 6.3 m/min (draft ratio: 1.0).

[Comparative Example 2]

Fiber RS2 was obtained for Comparative Example 2 in the same manner as Comparative Example 1, except that the moisture content of the solution obtained in the solution preparation step was 11 mass%.

[Comparative Example 3]

Cellulose fiber RS3 for Comparative Example 3, which was carried out in the same manner as Comparative Example 1 but with a moisture content of 13 mass% for the solution obtained in the solution preparation step, could not be produced because the extruded filament suffered breakage easily and could not be taken up.

[Comparative Example 4]

Cellulose fiber RS4 for Comparative Example 4, wherein the solution was prepared in the same manner as Example 1 but with a moisture content of 10 mass% for the mixed solvent, could not be produced due to failure of the cellulose to dissolve.

[Table 1]

Table 1

| Cellulose fiber production, Example/Comparative Example | | | Example 1 | Example 2 | Example 3 | Example 4 |
|---|---|---|---|---|---|---|
| | | | S1 | S2 | S3 | S4 |
| Starting material | Aprotic polar solvent | Type | DMSO | DMSO | DMSO | DMSO |
| | | Percentage in mixed solvent % | 75 | 75 | 75 | 75 |
| | Quaternary onium salt | Type | TBAA | TBPA | TOAA | TBAA |
| | | Percentage in mixed solvent % | 25 | 25 | 25 | 25 |
| | Cellulose | mass% (in solution) | 9 | 5 | 5 | 9 |
| | Water | mass% (in solution) | 2 | 2 | 2 | 2 |
| Dissolution conditions | Dissolution temperature | °C | 80 | 80 | 80 | 80 |
| | Dissolution time | h | 8 | 8 | 8 | 8 |
| Spinning conditions | Laboratory temperature | °C | 21 | 23 | 22 | 22 |
| | Laboratory humidity | %RH | 25 | 42 | 40 | 41 |
| | Temperature in air-gap | °C | 22 | 25 | 24 | 25 |
| | Humidity in air-gap | %RH | 31 | 62 | 61 | 61 |
| | Number of spinneret holes | hole | 16 | 16 | 16 | 16 |
| | Extrusion rate | m/min. | 6.3 | 6.3 | 6.3 | 6.3 |
| | Extrusion temperature | °C | 70 | 50 | 50 | 80 |
| | Air-gap length | mm | 10 | 10 | 10 | 30 |
| | Take-up speed | m/min. | 15 | 10 | 10 | 22 |
| | Draft ratio | - | 2.4 | 1.6 | 1.6 | 3.5 |
| | Rinsing temperature | °C | 25 | 25 | 25 | 25 |
| | Drying temperature | °C | 110 | 110 | 110 | 110 |
| | Stable running time | min. | G (>10) | G (>10) | G (>10) | G (>10) |

(continued)

| Cellulose fiber production, Example/Comparative Example | | | Example 1 | Example 2 | Example 3 | Example 4 |
|---|---|---|---|---|---|---|
| | | | S1 | S2 | S3 | S4 |
| Fiber properties | Total denier | dtex | 60 | 45 | 45 | 55 |
| | Strength | cN/dtex | 2.5 | 1.8 | 1.9 | 2.3 |
| | Elongation | % | 16 | 10 | 11 | 15 |
| | Yarn variation | % | G (3) | G (5) | G (4) | G (4) |
| | Degree of crystallinity | % | 45 | 44 | 43 | 45 |
| | Degree of orientation | % | 84 | 82 | 82 | 85 |
| | Secondary swelling | mass% | 117 | 120 | 118 | 108 |
| | Fibrillation degree | % | 1 | 3 | 4 | 5 |
| Results | Skin feel | - | 4.8 | 4.6 | 4.4 | 4.5 |
| | Elastic feel of fiber | - | 4.8 | 4.7 | 4.6 | 4.5 |

[Table 2]

Table 2

| Cellulose fiber production, Example/Comparative Example | | | Example 5 | Example 6 | Example 7 | Example 8 |
|---|---|---|---|---|---|---|
| | | | S5 | S6 | S7 | S8 |
| Starting material | Aprotic polar solvent | Type | DMSO | DMSO | DMSO | DMSO |
| | | Percentage in mixed solvent % | 75 | 75 | 75 | 75 |
| | Quaternary onium salt | Type | TBAA | TBAA | TBAA | TBAA |
| | | Percentage in mixed solvent % | 25 | 25 | 25 | 25 |
| | Cellulose | mass% (in solution) | 9 | 9 | 9 | 9 |
| | Water | mass% (in solution) | 2 | 2 | 2 | 5 |
| Dissolution conditions | Dissolution temperature | °C | 80 | 80 | 80 | 80 |
| | Dissolution time | h | 8 | 8 | 8 | 8 |

(continued)

| Cellulose fiber production, Example/Comparative Example | | | | Example 5 | Example 6 | Example 7 | Example 8 |
|---|---|---|---|---|---|---|---|
| | | | | S5 | S6 | S7 | S8 |
| Spinning conditions | Laboratory temperature | °C | | 22 | 22 | 21 | 21 |
| | Laboratory humidity | %RH | | 41 | 42 | 41 | 42 |
| | Temperature in air-gap | °C | | 24 | - | 23 | - |
| | Humidity in air-gap | %RH | | 70 | - | 81 | - |
| | Number of spinneret holes | hole | | 50 | 50 | 50 | 50 |
| | Extrusion rate | m/min. | | 6.3 | 6.3 | 6.3 | 6.3 |
| | Extrusion temperature | °C | | 50 | 50 | 42 | 50 |
| | Air-gap length | mm | | 10 | 0 | 10 | 0 |
| | Take-up speed | m/min. | | 15 | 10 | 7.6 | 7.6 |
| | Draft ratio | - | | 2.4 | 1.6 | 1.2 | 1.2 |
| | Rinsing temperature | °C | | 25 | 25 | 25 | 25 |
| | Drying temperature | °C | | 110 | 110 | 110 | 110 |
| | Stable running time | min. | | G (> 10) | G (> 10) | G (> 10) | G (>10) |
| Fiber properties | Total denier | dtex | | 150 | 290 | 375 | 375 |
| | Strength | cN/dtex | | 2.2 | 1.8 | 1.4 | 1.6 |
| | Elongation | % | | 15 | 7 | 10 | 8 |
| | Yarn variation | % | | G (5) | G (2) | G (7) | G (7) |
| | Degree of crystallinity | % | | 44 | 44 | 43 | 43 |
| | Degree of orientation | % | | 84 | 82 | 81 | 81 |
| | Secondary swelling | mass% | | 117 | 119 | 119 | 119 |
| | Fibrillation degree | % | | 3 | 1 | 1 | 1 |
| Results | Skin feel | - | | 4.7 | 4.6 | 4.6 | 4.6 |
| | Elastic feel of fibers | - | | 4.6 | 4.5 | 4.5 | 4.5 |

[Table 3]

Table 3

| Cellulose fiber production, Example/Comparative Example | | | Example 9 | Example 10 | Example 11 | Example 12 | Example 13 |
|---|---|---|---|---|---|---|---|
| | | | S9 | S10 | S11 | S12 | S13 |
| Starting material | Aprotic polar solvent | Type | DMSO | DMSO | DMSO | DMSO | DMSO |
| | | Percentage in mixed solvent % | 75 | 75 | 75 | 75 | 75 |
| | Quaternary onium salt | Type | TBAA | TBAA | TBAA | TBAA | TBAA |
| | | Percentage in mixed solvent % | 25 | 25 | 25 | 25 | 25 |
| | Cellulose | mass% (in solution) | 9 | 9 | 9 | 9 | 9 |
| | Water | mass% (in solution) | 2 | 2 | 2 | 2 | 2 |
| Dissolution conditions | Dissolution temperature | °C | 80 | 80 | 80 | 80 | 80 |
| | Dissolution time | h | 8 | 8 | 8 | 8 | 8 |
| Spinning conditions | Laboratory temperature | °C | 26 | 21 | 21 | 22 | 27 |
| | Laboratory humidity | %RH | 85 | 41 | 41 | 40 | 91 |
| | Temperature in air-gap | °C | 27 | 21 | 22 | 23 | 27 |
| | Humidity in air-gap | %RH | 90 | 60 | 62 | 61 | 95 |
| | Number of spinneret holes | hole | 50 | 26 | 26 | 26 | 50 |
| | Extrusion rate | m/min. | 6.3 | 0.5 | 0.5 | 0.5 | 6.3 |
| | Extrusion temperature | °C | 50 | 50 | 50 | 50 | 70 |
| | Air-gap length | mm | 10 | 10 | 10 | 10 | 10 |
| | Take-up speed | m/min. | 10 | 4 | 8 | 15 | 6.3 |
| | Draft ratio | - | 1.6 | 8.0 | 16 | 30 | 1.0 |
| | Rinsing temperature | °C | 25 | 25 | 25 | 25 | 25 |
| | Drying temperature | °C | 110 | 110 | 110 | 110 | 110 |
| | Stable running time | min. | G (>10) | G (>10) | G (>10) | G (>10) | G (>10) |

(continued)

| Cellulose fiber production, Example/Comparative Example | | | Example 9 | Example 10 | Example 11 | Example 12 | Example 13 |
|---|---|---|---|---|---|---|---|
| | | | S9 | S10 | S11 | S12 | S13 |
| Fiber properties | Total denier | dtex | 290 | 110 | 55 | 26 | 450 |
| | Strength | cN/dtex | 1.9 | 1.6 | 1.8 | 1.8 | 1.7 |
| | Elongation | % | 8 | 9 | 8 | 7 | 6 |
| | Yarn variation | % | G (8) | G (9) | G (9) | G (9) | G (9) |
| | Degree of crystallinity | % | 43 | 46 | 46 | 48 | 42 |
| | Degree of orientation | % | 82 | 86 | 88 | 89 | 81 |
| | Secondary swelling | mass% | 118 | 95 | 88 | 82 | 123 |
| | Fibrillation degree | % | 5 | 50 | 100 | 170 | 5 |
| Effect | Skin feel | - | 4.7 | 4.4 | 4.1 | 3.8 | 3.4 |
| | Elastic feel of fibers | - | 4.6 | 4.3 | 4.1 | 3.7 | 4.5 |

[Table 4]

Table 4

| Cellulose fiber production, Example/Comparative Example | | | Comp. Example 1 | Comp. Example 2 | Comp. Example 3 | Comp. Example 4 |
|---|---|---|---|---|---|---|
| | | | RS1 | RS2 | RS3 | RS4 |
| Starting material | Aprotic polar solvent | Type | DMSO | DMSO | DMSO | DMSO |
| | | Percentage in mixed solvent % | 75 | 75 | 75 | 75 |
| | Quaternary onium salt | Type | TBAA | TBAA | TBAA | TBAA |
| | | Percentage in mixed solvent % | 25 | 25 | 25 | 25 |
| | Cellulose | mass% (in solution) | 9 | 9 | 9 | 9 |
| | Water | mass% (in solution) | 9 | 11 | 13 | 10 |
| Dissolution conditions | Dissolution temperature | °C | 80 | 80 | 80 | 80 |
| | Dissolution time | h | 8 | 8 | 8 | 8 |

(continued)

| Cellulose fiber production, Example/Comparative Example | | | Comp. Example 1 | Comp. Example 2 | Comp. Example 3 | Comp. Example 4 |
|---|---|---|---|---|---|---|
| | | | RS1 | RS2 | RS3 | RS4 |
| Spinning conditions | Laboratory temperature | °C | 23 | 22 | 22 | - |
| | Laboratory humidity | %RH | 43 | 42 | 41 | - |
| | Temperature in air-gap | °C | - | - | 25 | - |
| | Humidity in air-gap | %RH | - | - | 62 | - |
| | Number of spinneret holes | hole | 50 | 50 | 50 | - |
| | Extrusion rate | m/min. | 6.3 | 6.3 | - | - |
| | Extrusion temperature | °C | 80 | 80 | - | - |
| | Air-gap length | mm | 0 | 0 | - | - |
| | Take-up speed | m/min. | 6.3 | 6.3 | - | - |
| | Draft ratio | - | 1.0 | 1.0 | - | - |
| | Rinsing temperature | °C | 25 | 25 | - | - |
| | Drying temperature | °C | 110 | 110 | - | - |
| | Stable running time | min. | × (3) | × (1.5) | × (0) | - |
| Fiber properties | Total denier | dtex | 450 | 450 | - | - |
| | Strength | cN/dtex | 0.7 | 0.5 | - | - |
| | Elongation | % | 5 | 4 | - | - |
| | Yarn variation | % | × (13) | × (15) | - | - |
| | Degree of crystallinity | % | 42 | 42 | - | - |
| | Degree of orientation | % | 81 | 81 | - | - |
| | Secondary swelling | mass% | 125 | 127 | - | - |
| | Fibrillation degree | % | 3 | 3 | - | - |
| Effect | Skin feel | - | 2.9 | 2.8 | - | - |
| | Elastic feel of fibers | - | 2.9 | 2.9 | - | - |

INDUSTRIAL APPLICABILITY

The method for producing cellulose fibers according to the present invention reduces yarn breakage in the spinning step and irregularities in thickness or physical properties of the obtained fibers, while allowing stable spinning, and it can therefore be suitably employed for production of cellulose fibers for a variety of purposes. The fibers obtained by the method for producing cellulose fibers of the invention have high strength and reduced fibrillation, as well as excellent feel on the skin, and can therefore be suitably utilized in functional clothing and the like.

**Claims**

1. A method for producing cellulose fibers comprising the following steps:

   a solution preparation step in which cellulose is dissolved in a mixed solvent of an aprotic polar solvent and a quaternary onium salt;
   an extrusion step in which the obtained solution is extruded from a spinneret into a filamentous form, where the moisture content of the solution during extrusion is 0.05 mass% to 8 mass%; and
   a coagulation step in which the extruded filament is coagulated in an aqueous coagulating bath containing water and the mixed solvent.

2. The method according to claim 1, wherein the temperature of the solution in the extrusion step is 40°C to 90°C.

3. The method according to claim 1 or 2, wherein the weight ratio of the aprotic polar solvent and the quaternary onium salt in the mixed solvent is 50:50 to 95:5.

4. The method according to any one of claims 1 to 3, wherein the aprotic polar solvent is dimethyl sulfoxide.

5. The method according to any one of claims 1 to 4, wherein the quaternary onium salt is a quaternary ammonium salt or quaternary phosphonium salt.

6. The method according to any one of claims 1 to 5, wherein an air-gap of 1 mm to 75 mm is provided in the extrusion step.

7. The method according to claim 6, wherein spinning is carried out in an atmosphere with a relative humidity of 90% or lower in the air-gap during the extrusion step.

8. Cellulose fibers having a tensile strength of 1.3 cN/dtex or greater and a fibrillation degree of 170% or lower.

9. The cellulose fibers according to claim 8, wherein the cellulose fibers are filament yarns.

## INTERNATIONAL SEARCH REPORT

| International application No. |
| :--- |
| **PCT/JP2021/047094** |

| | |
| :--- | :--- |
| **A.** | **CLASSIFICATION OF SUBJECT MATTER** |

*D01F 2/02*(2006.01)i
FI: D01F2/02

According to International Patent Classification (IPC) or to both national classification and IPC

| | |
| :--- | :--- |
| **B.** | **FIELDS SEARCHED** |

Minimum documentation searched (classification system followed by classification symbols)

D01F2/00-2/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| | |
| :--- | :--- |
| **C.** | **DOCUMENTS CONSIDERED TO BE RELEVANT** |

| Category* | Citation of document, with indication, where appropriate, of the relevant passages | Relevant to claim No. |
| :---: | :--- | :---: |
| Y | WO 2012/128315 A1 (KRI, INC.) 27 September 2012 (2012-09-27)<br>claims, examples 1, 19, fig. 4 | 1-9 |
| Y | JP 60-144332 A (TACHIKAWA KENKYUSHO) 30 July 1985 (1985-07-30)<br>claims | 1-9 |
| Y | JP 54-151613 A (SNIA VISCOSA SOCIETA NAZIONALE INDUSTRIA APPLICAZIONI VISCOSA, S. P. A.) 29 November 1979 (1979-11-29)<br>claims, page 3, lower right column, line 20 to page 4, upper left column, line 11 | 1-9 |
| A | JP 2013-538246 A (INNOVIA FILMS LTD.) 10 October 2013 (2013-10-10)<br>claims | 1-9 |

☐ Further documents are listed in the continuation of Box C.  ☑ See patent family annex.

| | | | |
| :--- | :--- | :--- | :--- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| :--- | :--- |
| **27 January 2022** | **08 February 2022** |

| Name and mailing address of the ISA/JP | Authorized officer |
| :--- | :--- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2021/047094** |

| Patent document cited in search report | | | Publication date (day/month/year) | Patent family member(s) | | | Publication date (day/month/year) |
| --- | --- | --- | --- | --- | --- | --- | --- |
| WO | 2012/128315 | A1 | 27 September 2012 | EP | 2690132 | A1 | |
| | | | | claims, examples 1, 19, fig. 4 | | | |
| | | | | JP | 2012-211302 | A | |
| | | | | US | 2014/0024823 | A1 | |
| | | | | CN | 103502344 | A | |
| | | | | ES | 2657748 | T | |
| | | | | LT | 2690132 | T | |
| | | | | PL | 2690132 | T | |
| JP | 60-144332 | A | 30 July 1985 | US | 4597798 | A | |
| | | | | claims | | | |
| | | | | GB | 2151632 | A | |
| | | | | FR | 2557165 | A | |
| JP | 54-151613 | A | 29 November 1979 | US | 4268666 | A | |
| | | | | claims, column 2, line 63 to column 3, line 5 | | | |
| | | | | GB | 2018259 | A | |
| | | | | DE | 2913369 | A | |
| | | | | FR | 2431517 | A | |
| | | | | FR | 2432534 | A | |
| | | | | IT | 7821922 | D | |
| | | | | IT | 7828527 | D | |
| JP | 2013-538246 | A | 10 October 2013 | WO | 2012/004583 | A1 | |
| | | | | claims | | | |
| | | | | US | 2013/0154139 | A1 | |
| | | | | GB | 2481824 | A | |
| | | | | EP | 2591007 | A | |
| | | | | CN | 103038259 | A | |
| | | | | SG | 186425 | A | |
| | | | | RU | 2013104995 | A | |
| | | | | BR | 112013000288 | A | |

Form PCT/ISA/210 (patent family annex) (January 2015)

**EP 4 273 308 A1**

## REFERENCES CITED IN THE DESCRIPTION

**Patent documents cited in the description**

- JP 5820688 B

- JP 2015093876 A